# EUROPEAN PATENT APPLICATION

(11) **EP 0 949 043 A2**
(43) Date of publication of application: **13.10.1999**
(21) Application number: 99500034.6
(22) Date of filing: 04.03.1999
(51) Int. Cl.: B23Q 7/04, B25B 5/06, B25J 15/02, G01B 5/08

(54) **A holding device on a manipulator of parts for machining**

(30) Priority: 06.04.1998 ES 9800724
(71) Applicant: Danobat, S. Coop, 20870 Elgoibar (Guipuzcoa) (ES)
(72) Inventor: Vicario Burgos, Angel Maria, 20879 Elgoibar (Guipuzcoa) (ES)

(57) **Abstract**

The holding device on a manipulator (1) of parts (4) for machining is used on a vertical lathe (2,3), wherein the cylindrical parts (4) being transferred are held by two fingers (7) of the manipulator head (1) to align the axes (5) of the part and of the manipulator head. The mechanism (11, 15, 17, 18, 19, 20) for the displacement of the fingers (7) has a drive rod (11) which rotates around a fixed shaft (15) connected to a hydraulic cylinder (6). The sensor (10) which cooperates to regulate the radial movement (14) of the fingers (7) and to measure the part held (4), is of angular displacements (A) and is located at a position which is always fixed relative to the drive rod (11).

## Description

The present invention relates to holding devices for workpieces or parts to be machined, for an automatic load and unload parts manipulator on a vertical lathe, using fingers forming a pincer, and with the actuating and regulation means of the radial expansion of the pincer, in accordance with the preamble to claim 1.

### PRIOR ART

Manipulators on vertical lathes are known which grip the workpiece or part in the vertical position from a load station, and move them to the machining station, displaced on a slide on the lathe bedplate, while another manipulator collects the part following machining and transfers it to an unloading station. The part, which is usually cylindrical, remains on a vertical axis and the holding device is fixed to the manipulator arm. The head of the holding device extends two pincer fingers until it holds the part at two diametrically opposite points on its periphery. Each pincer finger, emerging downward, is fixed to a plate on the manipulator head and moves with said plate along a guide by mutually independent but synchronised means. The nominal diameter of the part to be machined, is known in advance and the part is centred relative to the manipulator head by a self-centring cam regulator mechanism. In this known solution, the stroke of the holder pincer fingers is determined by an inclined runner, depending on the permissible tolerance of the diameter of the part to be loaded, and is short. The pincer fingers move from their most extended position to the diametric contact with the part, measured by two cam-operated electric micro-switches, their position being adjusted in advance for each batch of parts to be machined. One resulting drawback of this known system is the need also to adjust the position of the pincer fingers on each of their plates. Such known system has a further drawback, since the protective housing of the micro-switches must be removed in order to adjust the position, thereby being exposed to the influence of environmental soiling, including coolant fluid.

WO9507790 (EP-719198) describes a manipulator for the placement of burners, using a self-centring mechanism as described above for the movement of the pincer fingers, each connected to a sliding cursor on a runner and moved by a cylinder rod.

DE-4039167 describes a manipulator head with pincer fingers which each move radially on a guide on the common base, with linear control devices and mutually independent movement devices synchronised with a central element or rod to which a movement rod for each finger is connected in rotary form.

EP-110903 describes a manipulator of cylindrical or spherical parts which has a length measurement sensor to determine the diameter of the part held.

### DESCRIPTION OF THE INVENTION

The object of the invention is a holding device on a parts manipulator for a vertical lathe, with two radial movement holding fingers, provided with actuating means, means for regulating the radial movement, and means for measuring and selecting the parts to be held, as defined in claim 1.

The solution claimed allows the adjusted movement of the part holder fingers, being regulated by the lathe control unit for each batch of parts to be machined, and the self-centring holding of a cylindrical part in a vertical position. It also allows precise measurement of the diameter of the part held, so as to make a selection of parts according to diameter, and keeps the part vertical once collected.

The control unit has a table of values for part diameters recorded in the memory and including a range of tolerance. The control unit regulates the operation of a piston-cylinder for driving the holder pincer during the loading process of each batch of parts, while executes the control on the gripped part, for its identification and selection. The manipulator head therefore has a sensor to indirectly measure the diameter of the part gripped, since it measures the angular movement of a central rod opening and closing said pincer, whereby the value of the angle measured is compared with a table of values for the radial displacement of the pincer fingers according to a range of part diameters and their permissible tolerance. The type of sensor selected is an encoder to ensure that it is not affected by the detrimental influences of environmental conditions, including the lathe cooling fluid. The encoder is coupled to a kinematic link mechanism, which converts the cylinder rod run into a linear displacement of the holder fingers, considerably increasing the finger stroke in comparison with the system in the prior art. Said link mechanism has a central rotating shaft fixed to the bottom of the manipulator head, and is self-centring, and the encoder is at all times fixed in the same position relative to said central shaft. Thus no position adjustment is required for each part batch, as occurs with stroke-limiter micro-switches. The device for the drive and measurement of the angular movements, does not require a protective housing thanks to the placement of the sensor at the bottom of the manipulator head.

### DESCRIPTION OF THE DRAWINGS

FIG. 1 is a side elevation view of a parts manipulator for a vertical lathe, provided with the holding device according to an embodiment of the invention.

FIG. 2 is a top plan view of the drive mechanism of the pincer fingers in Figure 1, at the fully open position.

FIG. 3 is a top plan view of the drive mechanism in Figure 2, in the closed position, and showing the angle measured.

### A DETAILED DESCRIPTION OF THE INVENTION

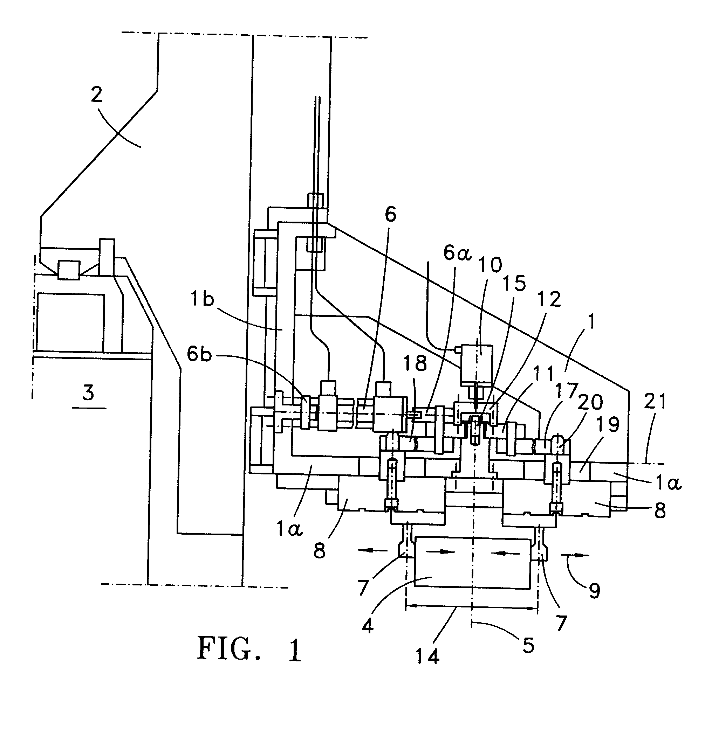

With reference to the embodiment in figure 1, the head 1 belongs to a vertical lathe manipulator supported by the slide 2. The manipulator head 1 can move horizontally on the lathe bedplate 3, and vertically on the slide 2 to place the part 4 in the vertical position at the machining station, with a common axis 5 between the head and the part. The manipulator head 1 has a base 1a and a vertical arm 1b. On a horizontal plane 21, the base 1a supports the actuating means and the means for regulating the movement of the pincer fingers 7, which are each fixed to a plate 8 moving in the direction of the arrows 9. The arm 1b supports the hydraulic cylinder 6 which drives the mechanism to open and close the holding fingers 7.

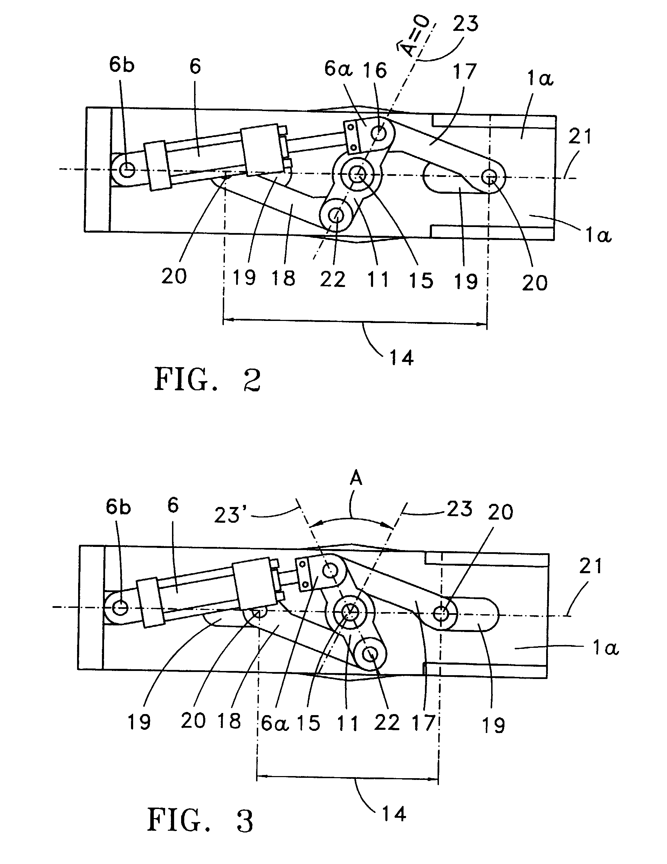

The angular movements sensor 10 is an encoder, whose shaft is coupled to the central rotary rod 11 through a coupling element 12, to measure the angle A turned by the rod 11, shown in figures 2 and 3, around its rotation shaft 15 which is fixed to the base 1a and at right angles to it. The plates 8 each with its respective finger 7, move an equal displacement on each side of the axis 5 of the head 1, to open or close the distance 14 separating them.

The mechanism driving the plates 8 is shown in figures 2 and 3 in two opposite operating conditions. It extends horizontally over the base 1a of the manipulator head, and comprises the hydraulic cylinder 6 articulated on the support arm 1b through the rotation shaft 6b, one end 6a of the cylinder stem which is articulated to one end of the central rod 11, through the rotation shaft 16, a first rod 17 for the linear displacement of one of the plates 8, and a second rod 18 to displace the other plate, and a runner 19 on each side of said central rod 11, where the cursor 20 of each rod, 17, 18, slides in the direction of the theoretical horizontal shaft 21 linking joint 6b of the cylinder with the rotation shaft 15 of the central rod 11. The cursor 20 each move their plate 8 outward if the stem 6a impels the central rod 11, or outward if it pulls on it. The opposite ends of the rods 17 and 18 from the cursor 20 are articulated to each end of the rod 11 through their respective rotation shafts 16, 22, and the cursor 20 convert the angular movement into the radial displacement of the plates 8.

When the stem 6a of the cylinder is fully extended as in figure 2, the sliding cursor 20 in each runner 19 are at the maximum distance 14 and, in the memory of the control unit not shown, a zero angle A value is assigned for the axial line 23 of the rod 11 in that position, to allow the encoder to record the angle turned by the rod 11 from that angle source. Thus, angle A in figure 3, where the rod 11 has turned to position 23' is that of minimum extension of the stem 6a and is the maximum value. The cursor 20 in figure 3 remain at the outside end of the runner 19, and the holder fingers 7 are at their minimum distance. The distance 14 separating the holder fingers 7 has a value in the control unit registers corresponding to the angle A turned by the rod 11. It is also registered the permissible tolerance corresponding to the measured distance 14, predetermined for each range of nominal diameter of the parts to be machined. Thus, for example, on the table of values registered, a 300 mm part diameter corresponds to a distance between the fingers 7 derived from an Angle A equal to 15°: if a tolerance is admitted of ± 5 mm in such diameter, the angle A value has a tolerance registered of ± 1°.

## Claims

1. A holding device on a manipulator for parts to be machined on a vertical lathe (3), provided with a control unit and comprising a manipulator head (1) with a base (1a), two holder fingers (7) moving radially under the base (1a) of the head, means (11, 16, 17, 18, 19) for driving said holder fingers (7) including a hydraulic cylinder (6) and means (10, 11, 12, 15) for regulating such displacement (14) characterised by:
- the means (11, 16, 17, 18, 19, 20) for driving the holder fingers comprise a self-centring rod mechanism (11, 17, 18), wherein a drive rod (11) connected to the stem (6a) of the cylinder rotates around a central shaft (15) fixed to the base (1a) of the head, and
- the regulating means (10, 11, 12, 15, 23) comprise a sensor (10) of angular displacements (A), coupled to the drive rod (11) in a fixed position relative to said rotation shaft (15), and a register in the control unit of the values of angle (A) turned by the longitudinal shaft (23) of the drive rod (11), corresponding with a range of part diameters (4).

2. The holding device in claim 1, wherein the drive rod (11) is connected at one end (16) to the stem (6a) of the cylinder and to a first linear displacement rod (18) for one of the fingers, and at the other end (22) to a second rod (18) to displace the other finger (7), while the two free ends of the first and second rods (18) are connected to their respective holding finger (7).
